# EUROPÄISCHE PATENTSCHRIFT

(11) **EP 0 863 424 B1**
(45) Veröffentlichungstag und Bekanntmachung des Hinweises auf die Patenterteilung: **11.04.2001**
(21) Anmeldenummer: 98250025.8
(22) Anmeldetag: 26.01.1998
(51) Int. Cl.: G02C 5/22, G02C 1/08

(54) **Dreiteiliges, schraubenloses Brillengestell aus Blech (Wahlweise VA/TI/AL) mit integriertem Federscharnier-Steck-System (Fss), mit formal integrierter Schliessspange**
Three piece, screwless sheet metal spectacle frame (optional VA/TI/AL) with integrated resilient hinge system and formal integrated clasp
Monture de lunettes en tôle (optionnellement VA/TI/AL) en trois parties et sans vis avec système de charnière élastique intégrée et fermoir formellement intégré

(30) Priorität: 27.01.1997 DE 19703812
(43) Veröffentlichungstag der Anmeldung: 09.09.1998
(73) Patentinhaber: Haffmans, Philipp, 10245 Berlin (DE); Gottschling, Harald, 10965 Berlin (DE)
(72) Erfinder: Haffmans, Philipp, 10245 Berlin (DE); Gottschling, Harald, 10965 Berlin (DE)
(74) Vertreter: Schwepfinger, Karl-Heinz, Dipl.-Ing.

(56) Entgegenhaltungen:
- WO-A-92/15916
- WO-A-95/14956
- DE-C- 239 111
- DE-U- 8 902 196
- DE-U- 29 701 753
- FR-A- 1 009 345
- US-A- 3 155 982
- US-A- 3 762 805

## Beschreibung

Die Erfindung betrifft ein schraubenloses Brillengestell, das aus Blech (wahlweise aus VA/TI/AL) gefertigt sein kann.

### Stand der Technik:

Bis auf wenige Ausnahmen sind handelsübliche Brillen mit einem Scharnier ausgestattet, dessen einer Teil mit Stiften am Rahmen und dessen anderer Teil in den Bügel eingeschossen ist (bei Kunststoffbrillen). Beide Teile werden ineinander geschoben und verschraubt. Das Öffnen und Schliessen der Brillenfassung wird bei den meisten korrekturglastauglichen Brillen mittels eines Schliessblocks gelöst. Ausnahmen bilden historische Brillen, bei denen die Schrauben durch das Glas geführt werden, Kunststoffbrillen, bei denen das Glas in die elastische Fassung eingepresst wird, oder aber unkonventionellere Lösungen, wie der mit Nylor-Faden, bei der der untere Teil des Glases von einem Nylonfaden gehalten wird.

In der US-Patentschrift Nr. 3, 155, 982 ist eine Brille beschrieben, die aus einem transparenten Hauptteil, in das die Gläser und eine Aufnahme für die Nase des Brillenträgers integriert sind, und zwei Brillenbügeln besteht. Die auf das Hauptteil zulaufenden Enden der Brillenbügel teilen sich in drei Blattfedern, wobei die mittlere Blattfeder an der Außenkante des Hauptteils anliegt, während die beiden äußeren Blattfedern mit an ihren Enden geformten Haken in Öffnungen eingreifen, die in der Nähe der Außenkante in dem Hauptteil angebracht sind.

In der französischen Patentschrift Nr. 1009345 ist ein Brillengestell mit Brillenbügeln beschrieben, deren auf die Fassung des Brillengestells zulaufendes Ende sich in drei zueinander parallele Blattfedern teilt. Dabei weist die Fassung links und rechts ein U-förmiges Ansatzstück auf, dessen Mittelteil ein Gelenk bildet, in das das Ende der mittleren der drei Blattfedern eingreift, das in der Form eines Hakens gebogen ist. Die beiden äußeren Blattfedern verlaufen auf ihrer ganzen Länge geradlinig, wobei ihre Enden im ausgeklappten Zustand der Bügel mit den Seitenflächen an der dem Brillenträger abgewandten Seite des Ansatzstücks und mit den Stirnflächen an der dem Brillenträger zugewandten Fläche der Brillenfassung zum Anliegen kommen, wodurch die Bügel im ausgeklappten Zustand stabilisiert werden.

Der Erfindung liegen die Probleme zugrunde:
a) ein Brillengestell zu schaffen, bei dem die Lösung für die Gelenkverbindung bereits in den Rahmen b.z.w. in den Bügel integriert ist, und das darüber hinaus auf herkömmliche Verbindungsarten wie zum Beispiel Schrauben, Bolzen, Nieten oder dergleichen, verzichtet.
b) eine Brille zu schaffen, deren Produktionsaufwand so gering wie möglich ist (Nach dem Bastelbogenprinzip : Dabei wird die Brille mit Hilfe der Lasertechnik wie bei einem Bastelbogen herausgeschnitten).
c) eine neue, durch die Technik bestimmte, auf der Idee des Verzichts basierende, reduzierte Formensprache zu entwickeln, die es bisher in dieser Weise noch nicht gibt (formalästhetisches Konzept).
e) einen Schliessmechanismus zum Öffnen und Schliessen der Fassung zu entwickeln, der dem in c) beschriebenen Konzept der Einfachheit formal und funktional gerecht wird.

Die Aufgabe der Erfindung besteht darin, einfache schraubenlose und leicht herstellbare Brillengestelle zu schaffen.

Diese Aufgabe wird durch ein Brillengestell nach Anspruch 1 bzw. 9 gelöst.

Vorteilhalfte Ausgestaltungen der Erfindung sind den Unteransprüchen zu entnehmen.

Erreichte Vorteile:
1. Wegen der einfachen, auf Spannung basierenden Verbindung ist es dem Benutzer möglich, formale Variationen des Bügels, ohne fachliche Hilfe, leicht und schnell auszutauschen;
2. Ohne Werkzeuge bequemes und schnelles Auswechseln der Gläser;
3. Minimierung des Herstellungsprozesses;
4. Durch die Anwendung des Bastelbogenprinzips bei der Herstellung (Ausschneiden aus der Fläche), sind formale Variationen (die das Federscharnier-Steck-System immer mit einbeziehen), ohne grossen technischen Aufwand möglich.
5. Schaffung einer neuen, technisch bestimmten, auf der Idee des Verzichts (Reduktion) basierenden Formensprache.

Drei Ausführungsbeispiele (A, B, C) der Erfindung werden anhand der Figuren 1 - 8 erläutert. Sie zeigen:
Fig. 1: Ausführungsbeispiel Version A, Verbindung Fassung/Bügel (Federscharnier-Steck-System) im aufgeklappten (offenen) Zustand;
Fig. 2: Ausführungsbeispiel Version A, Verbindung Fassung/Bügel (Federscharnier-Steck-System) im zugeklappten (geschlossenen) Zustand;
Fig. 3: Ausführungsbeispiel Version B, Verbindung Fassung/Bügel (Federscharnier-Steck-System) im aufgeklappten (offenen) Zustand;
Fig. 4: Ausführungsbeispiel Version B, Verbindung Fassung/Bügel (Federscharnier-Steck-System) im zugeklappten (geschlossenen) Zustand;
Fig. 5: Ausführungsbeispiel Version C, Verbindung Fassung/Bügel (Federscharnier-Steck-System) im aufgeklappten (offenen) Zustand, mit integrierter Schliessspange;
Fig. 6: Ausführungsbeispiel Version C, Verbindung Fassung/Bügel (Federscharnier-Steck-System) im zugeklappten (geschlossenen) Zustand, mit integrierter Schliessspange;
Fig. 7: Ausführungsbeispiel Version C, Teil einer Brillenfassung (offen) sowie der Schliessspange vor dem Aufschieben auf das Anschlusselement;
Fig. 8: Ausführungsbeispiel Version C, Teil einer Brillenfassung (geschlossen) sowie der Schliessspange nach dem Aufschieben auf das Anschlusselement.

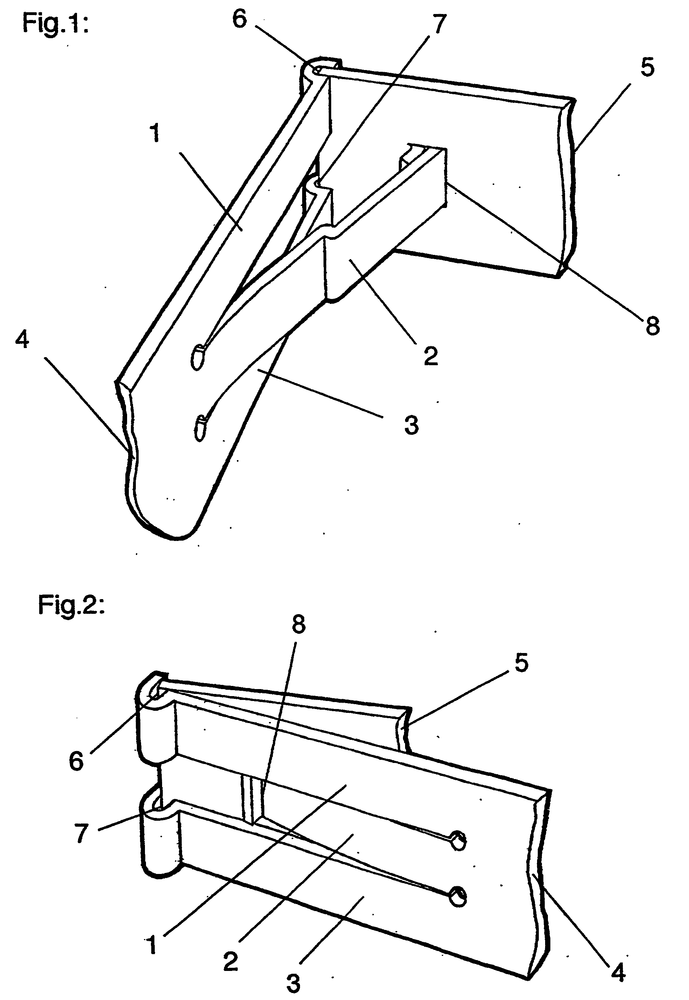

Zu den Figuren 1 und 2 (Version A, ohne Schliessspange und ohne nach hinten umgebogenes Anschlusselement):
Fig. 1:
   Die beiden äusseren Blattfedern 1 und 3 des Bügels 4 sind an ihren Enden U-förmig umgebogen, um so an die Aussparungen 6 und 7 des Fassungsteils 5 anzugreifen (Gelenkebene). Die mittlere Blattfeder 2 ist aus ihrer ursprünglichen Ebene im Bügel herausgehoben. Ihr Ende befindet sich in der gelaschten Aussparung 8 des Fassungsteils 5, wobei die rechte Seite der Aussparung 8 zugleich den Anschlag des Bügels 4 im aufgeklappten Zustand bildet. In diesem Zustand entsteht eine unter Spannung stehende, stabilisierende Dreieckskonstellation zwischen den Anfangspunkten der Blattfedern 1, 2 und 3 und den Endpunkten der Blattfedern in den Aussparungen 6, 7 und 8 der Fassung 5.
Fig. 2:
   Nach dem Einklappen des Bügels 4 ist die mittlere Blattfeder 2 in die gelaschte Aussparung 8 eingetaucht; ihr Ende liegt nun, für den Betrachter nicht sichtbar, hinter dem Fassungsteil 5. In diesem Zustand drückt die Federspannung der mittleren Blattfeder 2 den Bügel 4 an die Fassung 5. In diesem Zustand stabilisieren die U-förmigen Umbiegungen der äusseren Blattfedern 1 und 2 den Bügel in der Horizontalebene.

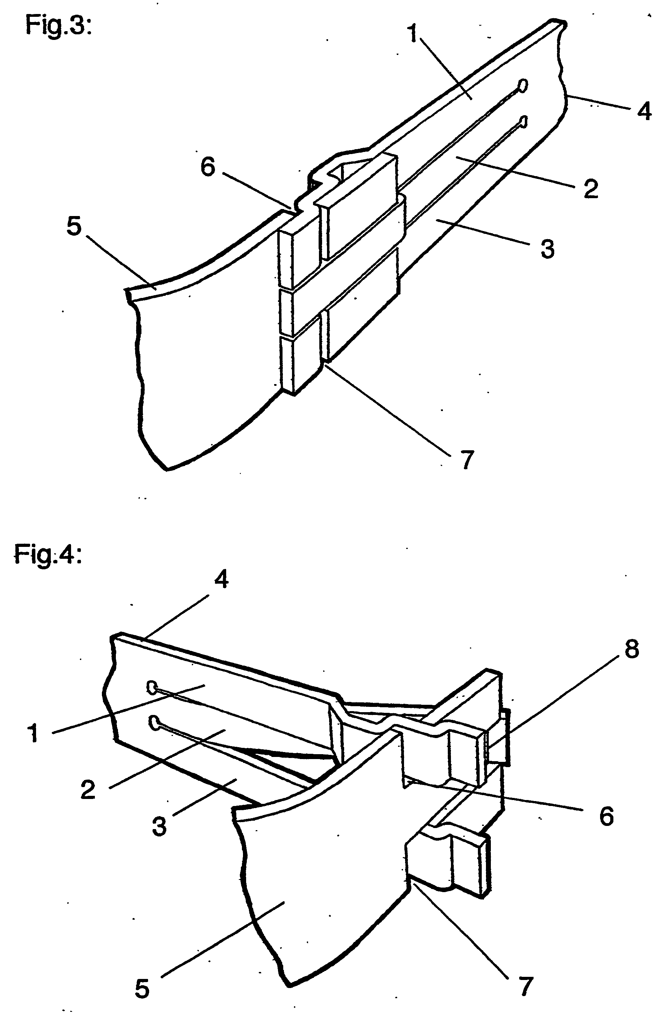

Zu den Figuren 3 und 4 (Version B, ohne Schliessspange und mit nach hinten umgebogenem Anschlusselement):
Fig. 3:
   Die Enden der äusseren Blattfedern 1 und 3 des Bügels 4 greifen von hinten durch die Aussparungen 6 und 7 an das gebogene, zur Fassung gehörende Anschlusselement 5. Die mittlere Blattfeder 2 greift von vorn an das Element 5. Die Gelenkebene bilden die Aussparungen 6 und 7. In diesem Zustand verhindern die Falze am Ende des Anschlusselements 5, in der Abbildung direkt neben der von vorn angreifenden Blattfeder 2, das Spiel in der horizontalen Ebene.
Fig. 4:
   Nach dem Zusammenklappen ist die mittlere Blattfeder 2 aus ihrer Ursprungsebene herausgehoben und über die Aussparung 8 geglitten. In diesem Zustand stabilisieren die Biegungen der Blattfedern 1 und 3 den Bügel 4 in der horizontalen Ebene, und bilden mit der unter Spannung befindlichen Blattfeder 2 die oben bereits genannte stabilitätsstiftende Dreieckskonstellation, wodurch ein Herausrutschen des Bügels verhindert wird.

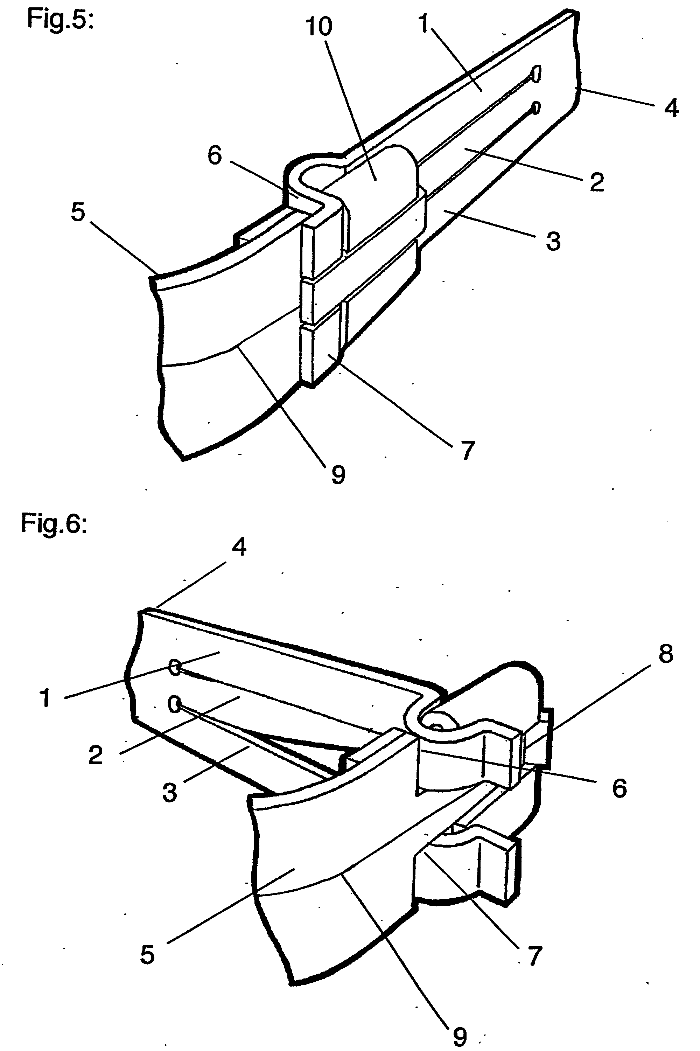

Zu den Figuren 5, 6, 7 und 8 (Version C, mit Schliessspange und mit nach hinten umgebogenem Anschlusselement):
Fig. 5:
   Fig. 5 (sowie auch die Figuren 6,7 und 8) zeigt ein weiteres Ausführungsbeispiel des bereits in den Figuren 3 und 4 dargestellten Prinzips. Fig. 5 beschreibt denselben Zustand wie Fig. 3, mit dem Unterschied, daß bei diesem Ausführungsbeispiel die bereits erwähnte Schliessspange 10, die dazu dient, die Fassung geschlossen zu halten, hinzugefügt wurde. Ferner ist zu beachten, dass die Enden der Blattfedern 1 und 3 andere Prägungen (Biegungen) aufweisen als in den Figuren 3 und 4 dargestellt, in ihrer Funktion jedoch identisch sind.
Fig. 6:
   Fig. 6 beschreibt denselben Zustand wie in Fig. 4, mit dem Unterschied, dass auch hier die Schliessspange 10 hinzugefügt wurde. Hier übernehmen ebenfalls die in diesem Ausführungsbeispiel anders geprägten Blattfedern 1 und 3 eine stabilisierende Funktion bezüglich des Spiels in der horizontalen Ebene.
Fig. 7:

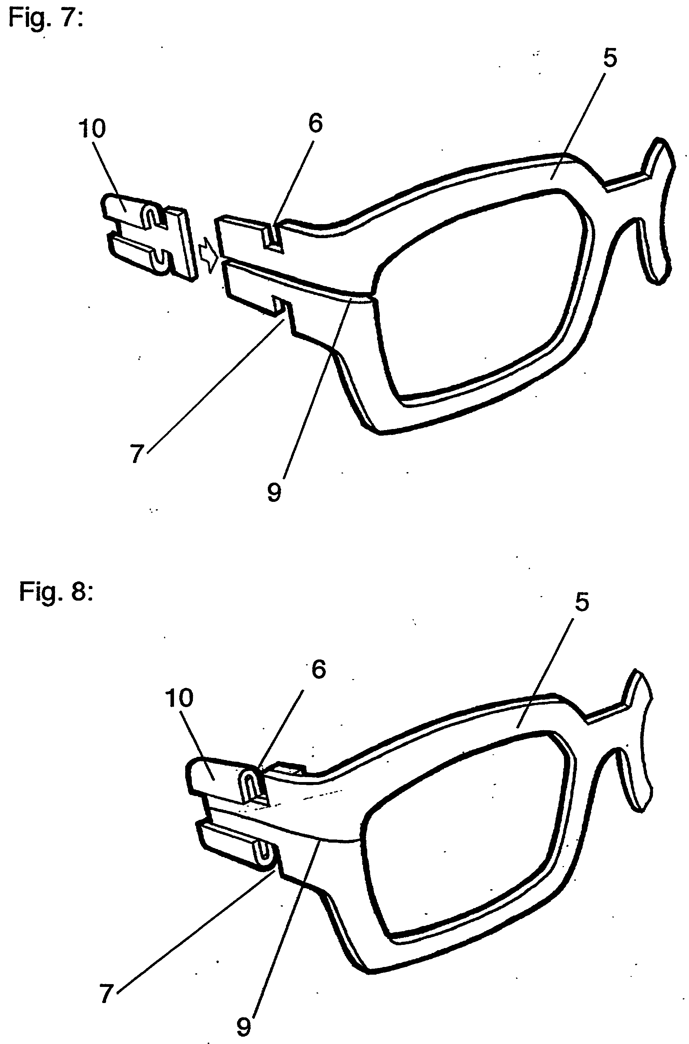

   Fig. 7 zeigt einen Ausschnitt der geöffneten Brillenfassung 5 (dass sie geöffnet ist, gibt der Schlitz 9 zu erkennen), sowie die Schliessspange 10 bevor sie über die noch geöffnete Brillenfassung 5 geschoben wurde. Die bereits in Fig. 3 erwähnten Aussparungen 6 und 7 am nach hinten gebogenen Anschlusselement sind hier deutlich zu erkennen.
Fig. 8:
   Fig. 8 zeigt die Brillenfassung 5, nachdem sie durch das Aufschieben der Schliessspange 8 geschlossen wurde. Der zuvor noch offene Schlitz 9 ist jetzt nur noch als Strich sichtbar.

### Zusatzbemerkung:

Das in Figur 1 und 2 dargestellte Ausführungsbeispiel Version A erlaubt eine Konstruktionsvariante, die sich durch einen Schlitz (wie bei Fig. 8 und 9), ausgehend vom inneren Fassungsrand, durch die Aussparung 8 hindurch zum äusseren Rand hin, auszeichnet (Man denke sich einen horizontalen Schnitt, der genau in der Mitte des in Fig. 1 dargestellten Fassungsteils 5 verlaufen würde, also sein Ende genau in der Mitte des äusseren Randes zwischen den Aussparungen 6 und 7 hätte). Durch diese Variation ist gewährleistet, dass sich die Fassung 5 öffnen lässt, um dadurch, (wie bei den Figuren 5,6,7 und 8) das Auswechseln der Gläser zu erleichtern. Entscheidend bei dieser Variante ist, dass sie ohne Schliessspange auskommt, da ihre Funktion durch das Angreifen der beiden äusseren Blattfedern 1 und 3 bereits erfüllt ist. Die Scherwirkung, die durch Auf- und Abbewegungen in horizontaler Ebene bei geöffnetem Zustand entsteht, wird durch die in den Rand geschliffene Nut des Glases unterbrochen.

Allen Ausführungsbeispielen ist gemein, daß die jeweils mittlere Blattfeder 2 in die Gegenrichtung überspannt ist, damit in den "entspannten" Zuständen immer noch genug Spannung vorhanden ist, um die Teile Rahmen 5 und Bügel 4 stramm zusammenzuhalten.

## Patentansprüche

1. Brillengestell mit einer Fassung, die rechts und links je ein Anschlußelement (5) aufweist, dessen bügelseitiges Ende in Richtung der Bügel (4) im ausgeklappten Zustand weist und im Vergleich zur Länge der Bügel (4) relativ kurz ist, wobei in jedem Anschlußelement (5) eine obere Aussparung (6) und eine untere Aussparung (7) vorgesehen sind, die eine senkrecht zur Richtung der ausgeklappten Bügel verlaufende Gelenkachse bilden, und mit zwei Bügeln (4), deren auf die Fassung zulaufendes Ende sich in drei zueinander parallele Blattfedern (1, 2, 3) teilt, wobei im zusammengebauten Zustand des Brillengestells bei ausgeklappten Bügeln die mittlere Blattfeder (2) mit ihrem freien Ende an der dem Gesicht des Brillenträgers abgewandten Fläche des Anschlußelements (5) anliegt und die beiden äußeren Blattfedern (1, 3) in Richtung ihrer freien Enden zunächst an der dem Gesicht des Brillenträgers zugewandten Fläche des Anschlußelements (5) anliegen, dann jeweils durch die senkrechten Aussparungen (6, 7) des Anschlußelements (5) hindurchführen und schließlich an der dem Gesicht des Brillenträgers abgewandten Fläche des Anschlußelements (5) zum Anliegen kommen, und wobei die äußeren Blattfedern (1, 3) im Bereich ihrer freien Enden Biegungen aufweisen, die ein Herausrutschen der Bügel aus dem Anschlußelement (5) verhindern und die Bügel (4) im zusammengeklappten Zustand der Brille stabilisieren.

2. Brillengestell nach Anspruch 1, bei dem die Fassung darüber hinaus aus zwei die Brillengläser einrahmenden Teilen, an die sich die Anschlußelemente anschließen, und einem diese Teile verbindenden Steg besteht.

3. Brillengestell nach Anspruch 2, bei dem die Anschlußelemente jeweils durch einen von dem Rand des Anschlußelements waagerecht zu den Aussparungen und zwischen diesen hindurch verlaufenden Schlitz (9), der bis zum Innenrand des entsprechenden ein Glas einrahmenden Teils verläuft, geteilt sind, so daß die Gläser der Brille leicht gewechselt werden können.

4. Brillengestell nach Anspruch 3, bei dem darüber hinaus zwei Schließspangen (10) vorgesehen sind, die jeweils über ein geteiltes Anschlußelement geschoben werden.

5. Brillengestell nach Anspruch 4, bei dem die Schließspangen (10) jeweils aus einer Platte in der Größe der Anschlußelemente bestehen, in der den Aussparungen (6, 7) der Anschlußelemente entsprechende Aussparungen an entsprechenden Stellen ausgebildet sind, wobei die Platte zu beiden Seiten U-förmig umgebogen ist, so daß beim Aufschieben auf ein Anschlußelement eine Aussparung entsteht, die dazu dient, im ausgeklappten Zustand der Bügel die mittlere Blattfeder (2) aufzunehmen.

6. Brillengestell nach einem der vorhergehenden Ansprüche, bei dem die Form der Biegungen der beiden äußeren Blattfedern (1, 3) im Bereich ihrer freien Enden eine Stufe aufweist.

7. Brillengestell nach einem der Ansprüche 1 bis 5, bei dem die Biegungen der beiden äußeren Blattfedern (1, 3) im Bereich ihrer freien Enden U-förmig sind.

8. Brillengestell nach einem der vorhergehenden Ansprüche, bei. dem die beiden Aussparungen (6, 7) des Anschlußelements (5) einander gegenüberliegen.

9. Brillengestell mit einer Fassung und zwei Bügeln (4), deren auf die Fassung zulaufendes Ende sich in drei zueinander parallele Blattfedern (1, 2, 3) teilt, wobei die beiden äußeren Blattfedern (1, 3) U-förmige Endstücke aufweisen, die die Außenkante der Fassung umklammern, an den Stellen, an denen die äußeren Blattfedern (1, 3) die Außenkante der Fassung umklammern, Aussparungen in der Außenkante vorgesehen sind und die innere Blattfeder (2) durch eine in einem Abstand zur Außenkante der Fassung angeordnete Öffnung hindurchläuft.

10. Brillengestell nach einem der vorhergehenden Ansprüche, bei dem alle Teile aus Blech gefertigt sind.

## Claims

1. A spectacle frame comprising a mounting having a right and a left connecting member (5) whose end on the side-piece side is oriented towards the side-pieces (4) in the folded-out condition thereof and is relatively short as compared with the length of the side-pieces (4), each connecting member (5) having provided therein an upper recess (6) and a lower recess (7), which form an articulation axis extending perpendicularly to the direction of the folded-out side-pieces, and comprising a pair of side-pieces (4) whose end extending towards the mounting is divided into three leaf springs (1, 2, 3) parallel to each other, the free end of the central leaf spring (2) resting against the face of the connecting member (5) facing away from the face of the person wearing the spectacles in the assembled condition of the spectacle frame with the side-pieces folded out, and the two outer leaf springs (1, 3), in the direction of the free ends thereof, first resting against the face of the connecting member (5) facing the face of the person wearing the spectacles, then each passing through the vertical recesses (6, 7) of the connecting member (5) and finally coming to rest against the face of the connecting member (5) facing away from the face of the person wearing the spectacles, and the outer leaf springs (1, 3) having bends in the region of their free ends which prevent the side-pieces from slipping out of the connecting member (5) and stabilize the side-pieces (4) in the folded condition of the spectacles.

2. The spectacle frame according to claim 1, in which the mounting is further comprised of two parts which frame the spectacle lenses and are adjoined by the connecting members, and a bridge connecting these parts.

3. The spectacle frame according to claim 2, in which the connecting members are each divided by a slot (9) extending from the edge of the connecting member horizontally to the recesses and through the latter and extending as far as to the inner edge of the respective part framing a lens, so that the spectacle lenses may be exchanged easily.

4. The spectacle frame according to claim 3, in which furthermore two closing clasps (10) are provided which are each slipped over a divided connecting member.

5. The spectacle frame according to claim 4, in which the closing clasps (10) each consist of a plate having the size of the connecting members, in which recesses which correspond to the recesses (6, 7) of the connecting members are formed at corresponding points, the plate being bent into a U-shape on either side, so that when it is slipped onto a connecting member a recess is formed which serves to receive the central leaf spring (2) in the folded-out condition of the side-pieces.

6. The spectacle frame according to any one of the preceding claims, in which the shape of the bends of the two outer leaf springs (1, 3) has a step in the region of the free ends thereof.

7. The spectacle frame according to any one of claims 1 to 5, in which the bends of the two outer leaf springs (1, 3) are U-shaped in the region of the free ends thereof.

8. The spectacle frame according to any one of the preceding claims, in which the two recesses (6, 7) of the connecting member (5) are situated opposite each other.

9. A spectacle frame comprising a mounting and a pair of side-pieces (4) whose ends extending towards the mounting are each divided into three leaf springs (1, 2, 3) parallel to each other, the two outer leaf springs (1, 3) having U-shaped end pieces which clasp the outer edge of the mounting, recesses being provided in the outer edge at the points where the outer leaf springs (1, 3) clasp the outer edge of the mounting, and the inner leaf spring (2) passing through an opening arranged at a distance from the outer edge of the mounting.

10. The spectacle frame according to any one of the preceding claims, in which all parts are made of sheet metal.

## Revendications

1. Monture de lunettes, avec une partie de monture sertissant les verres qui présente à gauche et à droite un élément de raccordement (5) dont l'extrémité côté branche est orientée en direction des branches (4) à l'état déplié et qui est relativement courte par rapport à la longueur des branches (4), chaque élément (5) étant pourvu d'un évidement supérieur (6) et d'un évidement inférieur (7), lesquels forment un axe d'articulation s'étendant perpendiculairement à la direction des branches dépliées, et avec deux branches (4) dont l'extrémité se terminant sur la monture se divise en trois ressorts à lames (1, 2, 3) parallèles les uns aux autres, et, lorsque de la monture de lunettes est assemblée et les branches sont dépliées, le ressort à lames (2) médian reposant avec son extrémité libre sur la surface de l'élément de raccordement (5) qui est détournée du visage du porteur de lunettes, et les deux ressorts à lames (1, 3) extérieurs reposant, en direction de leurs extrémités libres, tout d'abord sur la surface de l'élément de raccordement (5) qui est détournée du visage du porteur de lunettes, traversant ensuite les évidements (6, 7) verticaux respectifs de l'élément de raccordement (5) et venant finalement en appui sur la surface de l'élément de raccordement (5) qui est tournée vers le visage du porteur de lunettes, et les ressorts à lames (1, 3) extérieurs présentant dans la zone de leurs extrémités libres des courbures qui empêchent les branches de glisser hors de l'élément de raccordement (5) et qui stabilisent les lunettes lorsque celles-ci sont repliées.

2. Monture de lunettes selon la revendication 1, dans laquelle la partie de monture sertissant les verres est en outre constituée par deux pièces encadrant les verres, auxquelles se raccordent les éléments de raccordement, et par une arcade reliant ces pièces l'une à l'autre.

3. Monture de lunettes selon la revendication 2, dans laquelle les éléments de raccordement sont chacun divisés par une fente (9) s'étendant depuis le bord de l'élément de raccordement, à l'horizontale par rapport aux évidements et à travers ceux-ci, qui s'étend jusqu'au bord intérieur de la pièce correspondante qui encadre un verre, de sorte que les verres des lunettes peuvent être facilement remplacés.

4. Monture de lunettes selon la revendication 3, dans laquelle sont en outre prévues deux agrafes de fermeture (10) qui sont enfilées chacune sur un élément de raccordement divisé.

5. Monture de lunettes selon la revendication 4, dans laquelle les agrafes de fermeture (10) sont chacune constituées par une plaque de la taille des éléments de raccordement dans laquelle des évidements correspondant aux évidements (6, 7) des éléments de raccordement sont réalisés à des emplacements correspondants, la plaque étant recourbée en forme de U sur les deux côtés, de sorte que lors de l'enfilage sur un élément de raccordement, il se forme un évidement qui sert à recevoir le ressort à lames (2) médian lorsque les branches sont dépliées.

6. Monture de lunettes selon l'une quelconque des revendications précédentes, dans laquelle la forme des courbures des deux ressorts à lames (1, 3) extérieurs présente un gradin dans la zone de leurs extrémités libres.

7. Monture de lunettes selon l'une quelconque des revendications 1 à 5, dans laquelle les courbures des deux ressorts à lames (1, 3) extérieurs sont en forme de U dans la zone de leurs extrémité libres.

8. Monture de lunettes selon l'une quelconque des revendications précédentes, dans laquelle les deux évidements (6, 7) de l'élément de raccordement (5) sont situés à l'opposé l'un de l'autre.

9. Monture de lunettes avec une partie de monture sertissant les verres et deux branches (4) dont l'extrémité se terminant sur la monture se divise en trois ressorts à lames (1, 2, 3) parallèles les uns aux autres, les deux ressorts à lames (1, 3) extérieurs présentant des tronçons d'extrémité en forme de U qui entourent l'arête extérieure de la monture, des évidements étant prévus sur l'arête extérieure aux emplacements auxquels les ressorts à lames (1, 3) extérieurs entourent l'arête extérieure de la monture, et le ressort à lames (2) intérieur traversant une ouverture agencée à distance de l'arête extérieure de la monture.

10. Monture de lunettes selon l'une quelconque des revendications précédentes, dans laquelle toutes les pièces sont réalisées en tôle.
